# EUROPÄISCHE PATENTANMELDUNG

(11) **EP 2 325 273 A1**
(43) Veröffentlichungstag der Anmeldung: **25.05.2011**
(21) Anmeldenummer: 10188350.2
(22) Anmeldetag: 21.10.2010
(51) Int. Cl.: C09J 7/02

(54) **Montageklebeband für den Innenausbau**

(30) Priorität: 03.11.2009 DE 102009046363
(71) Anmelder: tesa SE, 20253 Hamburg (DE)
(72) Erfinder: Müssig, Bernhard Dr., 21218, Seevetal (DE); Metzler, Kerstin, 22457, Hamburg (DE); Bünz, Stephan, 25746, Ostrohe (DE); Kreft, Christian, 20255, Hamburg (DE)

(57) **Zusammenfassung**

Montageklebeband für den Innenausbau aus einem Träger und einer darauf zumindest einseitig aus der Schmelze beschichteten Klebemasse
dadurch gekennzeichnet dass,
die Klebemasse ein Ethylen-Propylen-Kautschuk mit einer Dichte zwischen 0,86 und 0,89 g/cm³ und ein Klebharz enthält.

## Beschreibung

### Montageklebeband für den Innenausbau

Die Erfindung betrifft ein Montageklebeband für den Innenausbau von Dächern in Gebäuden, insbesondere zum Verkleben von Winddichtungen, Dampfbremsen und Dampfsperren.

Nach dem Befestigen von wärmedämmenden Materialien an Wänden, Dachflächen und ähnlichem werden zumeist Folien oder Folienverbundwerkstoffe eingebracht, um Energieverlust durch Zugluft und Kondensation von Feuchtigkeit aus dem Gebäude im Isoliermaterial und Gebälk zu vermeiden. Zum Befestigen auf verschiedensten Untergründen sowie zum dichten Verkleben der entstehenden Überlappungsstellen und Außenkanten werden einseitig oder doppelseitig klebende Montagebänder eingesetzt.

An alle im Dachbereich verwendeten Montageklebebänder werden hohe Anforderungen im Bezug auf ihre Resistenz gegenüber Wasser, Klebefähigkeit, insbesondere auch bei Temperaturen bis 0 °C, Alterungsbeständigkeit und Abdichtungsfähigkeit gestellt. Die Verklebung auf verschmutzten und/oder rauen Untergründen, wie zum Beispiel Betonoberflächen oder Holzsparren, muss sicher halten. Da die Winddichtungen, Dampfbremsen und Dampfsperren meistens aus Polyolefinfolien bestehen, ist eine starke Haftung auch auf solchen unpolaren Untergründen notwendig.

Ein einseitig klebendes Montageband für die Verklebung von Winddichtungen, Dampfbremsen und Dampfsperren wird in der DE 297 23 454 U1 beschrieben. Dieses Montageband besteht wie die im Handel üblicherweise erhältlichen Produkte aus einer Folie und einer Acrylatklebemasse.

In der Praxis werden Montagebänder mit Masseaufträgen von ca. 200 g/m² angeboten um auf rauen Untergründen gut kleben zu können. Masseaufträge von mehr als 80 g/m² sind durch Trocknen einer Lösung oder Dispersion einer Klebemasse sehr aufwändig und damit teuer. Acrylatklebemassen zeichnen sich durch hohe Haftung auf polaren Untergründen, aber besonders schlechter Haftung auf unpolaren Untergründen wie Polyolefinen aus. Polyethylenfolien, wie sie im Dachausbau üblicherweise verwendet werden, sind daher nur schwer zu verkleben. Kautschukklebemassen wären diesbezüglich von Vorteil, weisen jedoch eine zu geringe Alterungsbeständigkeit auf. Die marktgängigen Montagebänder basieren auf Acrylatdispersionen, sie verlieren bei Nässe durch Reemulgierung ihr Klebvermögen weitestgehend.

Aufgabe der Erfindung ist es, hier Abhilfe zu schaffen und ein alterungsstabiles und gut haftendes Montageband für den Innenausbau speziell für den Dachbereich zur Verfügung zu stellen.

Gelöst wird diese Aufgabe durch ein Montageband, wie es im Hauptanspruch niedergelegt ist. Vorteilhafte Weiterbildungen des Erfindungsgegenstands sowie Verwendungen finden sich in den Unteransprüchen.

Ethylen-Propylen-Kautschuke (bekannt als EPM und EPDM) gelten dem Fachmann für hochwertige Haftklebemassen als nicht geeignet. Sie können für klebrige Schichten von wiederabziehbaren Oberflächenschutzfolien mit einer Klebkraft von deutlich unter 1 N/cm eingesetzt werden. Sie kommen auch als vulkanisierbare Komponente in Klebstoffen für Dachbahnen in Frage.

Dennoch können aus Ethylen-Propylen-Kautschuk mit einer Dichte zwischen 0,86 und 0,89 g/cm³ und einem Klebharz überraschenderweise wohlgeeignete Montagebänder für den Innenausbau im Dachbereich hergestellt werden und weisen hohe Haftung auf Polyethylenfolien und sägerauen Dachbalken, Ziegel oder Putz auf.

Demgemäß betrifft die Erfindung ein Montageband für den Innenausbau aus einem Träger und einer darauf mindestens einseitig beschichteten Klebemasse aus einem Ethylen-Propylen-Kautschuk mit einer Dichte zwischen 0,86 und 0,89 g/cm³ vorzugsweise zwischen 0,86 und 0,88 g/cm³ und einem Klebharz.

Der Ethylen-Propylen-Kautschuk kann neben Ethylen und Propylen auch weitere Monomere wie Buten, Octen oder ein Dien enthalten. Die Mooney-Viskosität ML 1+4 bei 125 °C beträgt vorzugsweise mindestens 20, besonders bevorzugt 40 und insbesondere mindestens 60. Je höher die Mooney-Viskosität ist, desto besser verhält sich das Montageband im Feucht-Wärme-Lagerungstest.

Da die Auswahl an geeigneten dienfreien Ethylen-Propylen-Kautschuken (EPM) beschränkt ist, werden EPDM-Kautschuke (also Ethylen-Propylen-Kautschuke mit einem Dien) bevorzugt. Weiterhin ist ihre Vernetzbarkeit mit energiereichen Strahlen oder Chemikalien wie Peroxide, Phenolharze oder Schwefelverbindungen von Vorteil. EPDM-Kautschuke enthalten neben Ethylen und Propylen ein Dien meistens das Ethyliden-Norbornen (ENB) aber auch Dicyclopentadien oder 5-Vinyl-2-norbornen.

Damit die Klebemasse ausreichend klebrig ist und keinen oder nur wenig Weichmacher erforderlich macht, soll die Kristallinität so gering wie möglich sein, dies wird am besten mit einem Gehalt von weniger als 75 Gew.-%, vorzugsweise weniger als 60 Gew.-% Ethylen erreicht. Als Maß für die Kristallinität dienen Kristallitschmelzpunkt und Schmelzwärme. Der Kristallitschmelzpunkt liegt vorzugsweise unter 105 °C, besonders bevorzugt unter 80 °C und insbesondere unter 50 °C. Die Schmelzwärme liegt vorzugsweise unter 40 J/g, besonders bevorzugt unter 20 J/g und insbesondere ist sie so gering, dass sie mit DSC nicht ermittelbar ist.

Da der Zusatz von anderen erheblich kristallinen Polyolefinen wie teilkristallinen Ethylen-, Propylen- oder Butenpolymeren ebenfalls für die Klebrigkeit schlecht ist, sollen Polyolefine mit einem Kristallitschmelzpunkt von 105 °C oder höher oder selbst solche einem Kristallitschmelzpunkt von 90 °oder höher vorzugsweise nicht in der Klebemasse enthalten sein. Der Ethylen-Propylen-Kautschuk weist vorzugsweise einen Schmelzindex von weniger als 0,5 g/10 min, besonders bevorzugt von weniger als 0,2 g/10 min auf.

Der Ethylen-Propylen-Kautschuk ist vorzugsweise mit einem vernetzbaren Comonomer gepfropft wie Vinylsilan (zum Beispiel Vinyltriethoxysilan), Glycidylmethacrylat, Acrylsäure, Hydroxyethylmethacrylat und besonders bevorzugt Maleinsäureanhydrid. Besonders vorteilhaft ist es die erfindungsgemäße Klebemasse zu vernetzen zum Beispiel mit Isocyanaten, Epoxiden, Titanverbindungen, Aluminiumverbindungen, Zinkverbindungen, Oxazolinen, Aziridinen oder Aminen.

Als Klebharz sind Harze auf Basis von Kolophonium, Kohlenwasserstoffen wie Piperylien oder Terpenen wie β-Pinen, vorzugsweise partiell oder vollständig hydriert gut geeignet. Die Menge beträgt vorzugsweise 130 bis 350 phr (phr bedeutet Gewichtsteile bezogen auf 100 Gewichtsteile Kautschuk).

Die Klebemasse enthält vorzugsweise einen flüssigen Weichmacher wie beispielsweise Mineralöle, flüssige Polymerisate aus Isobutenhomopolymer und/oder Isobuten-Buten-Copolymer, Flüssig- und Weichharze mit einem Schmelzpunkt unter 40 °C auf Basis der Rohstoffe von Klebharzen.

Die erfindungsgemäße Klebemasse kann ohne Antioxidans auskommen. Für eine hohe Langzeitstabilität wird vorzugsweise ein primäres Antioxidans, zum Beispiel auf phenolischer Basis, besonders bevorzugt mindestens 2 phr und optional auch ein sekundäres Antioxidans verwendet. Bei Anwendungen, bei denen das Klebeband längere Zeit dem Licht (zum Beispiel der Sonneneinstrahlung) ausgesetzt ist, wird vorzugsweise ein Lichtschutzmittel besonders bevorzugt ein HALS wie Tinuvin 111 oder Tinuvin 922, ein UV-Absorber wie Tinuvin P oder deckendes Pigment eingesetzt.

Zur Optimierung der Eigenschaften kann die zum Einsatz kommende Selbstklebemasse mit weiteren Additiven wie Füllstoffen, Flammschutzmitteln, Pigmenten, Antiozonantien, Photoinitiatoren oder Vernetzungsmitteln oder Vernetzungspromotoren abgemischt sein. Geeignete Füllstoffe und Pigmente sind beispielsweise Ruß, Titandioxid, Calciumcarbonat, Zinkcarbonat, Zinkoxid, Silicate oder Kieselsäure.

Die Summe der Anteile der Additive oder sonstiger Zuschlagstoffe übersteigt gemäß einer vorteilhaften Ausführungsform nicht 5 Gew.-%.

Die Herstellung und Verarbeitung der Haftklebemassen kann aus Lösung sowie aus der Schmelze erfolgen. Der Vorteil der Verarbeitung der Haftklebemasse aus der Schmelze liegt in der Möglichkeit, sehr hohe Schichtdicken (Masseaufträge) in sehr kurzer Zeit erreichen zu können, da nach der Beschichtung kein Lösungsmittel entfernt werden muss. Bevorzugte Herstell- und Verarbeitungsverfahren erfolgen daher aus der Schmelze. Für den letzteren Fall umfassen geeignete Herstellprozesse sowohl Batchverfahren als auch kontinuierliche Verfahren. Besonders bevorzugt ist die kontinuierliche Fertigung der Haftklebemasse mit Hilfe eines Extruders und anschließender Beschichtung direkt auf das zu beschichtende Substrat oder ein Trennpapier beziehungsweise eine Trennfolie bei entsprechend hoher Temperatur der Klebmasse. Als Beschichtungsverfahren werden Extrusionsbeschichtung mit Breitschlitzdüsen und Kalanderbeschichtung bevorzugt.

Der Masseauftrag (Beschichtungsstärke) liegt je nach Anwendung vorzugsweise zwischen 50 und 300 g/m², besonders bevorzugt zwischen 100 und 150 g/m², und können wegen des hohen Klebvermögens geringer gehalten als bei handelsüblichen Montagebändern auf Acrylatbasis.

Da die Klebemasse lösungsmittelfrei herstellbar ist, sind auch hohe Masseaufträge durch Schmelzbeschichtung einfach zu bewerkstelligen

Vorzugsweise ist die Klebemasse vernetzt.

Die Klebkraft auf Stahl beträgt vorzugsweise mindestens 10 N/cm.

Als Trägermaterial können Kunststoff-Folien wie zum Beispiel Folien aus Polyethylen, Polypropylen, Polybuten, deren Copolymeren, Blends dieser Polymeren zum Beispiel mit Polyethylenvinylacetat oder lonomeren, sowie Folien aus Polyvinylchlorid eingesetzt werden. Dehnbare Folien können durch eine Armierung, vorzugsweise ein Fadengelege, verstärkt werden. Weiterhin ist der Einsatz von Papier-Kunststoff-Verbunden, die zum Beispiel durch Extrusionsbeschichtung oder Laminierung erhalten werden, möglich. Textilmaterialien können je nach Anwendung offenporig oder als Textil-KunststoffVerbund als Trägermaterial verwendet werden.

Vorzugsweise umfasst der Träger mindestens eine Lage, vorzugsweise eine Folie wie aus Polyolefin, Polyester, PVC oder Papier oder ein Fadengelege oder ein Textil oder aus ein Verbund aus diesen Stoffen.

Das Trägermaterial kann zum Beispiel Dicken zwischen 30 und 150 µm aufweisen, bevorzugt zwischen 50 und 120 µm.

Auf der Streichseite (Beschichtungsseite) können die Oberflächen der Träger chemisch oder physikalisch (zum Beispiel Corona) zur Verbesserung der Masseverankerung vorbehandelt sein, sowie die Rückseite derselben einer antiadhäsiven physikalischen Behandlung oder einer Beschichtung wie zum Beispiel aus Silikon oder Polyvinylstearylcarbamat unterzogen sein.

Das Montageband wird dadurch gebildet, dass auf den Träger partiell oder vollflächig vorzugsweise ein- oder gegebenenfalls beidseitig die Klebemasse aufgetragen wird. Weiterhin kann die Beschichtung auch auf beide Seiten des Trägermaterials erfolgen, so dass ein doppelseitiges Klebeband entsteht. Das Montageband kann mit einem oder zwei Linern (Trennfolien oder Trennpapieren) abgedeckt sein. In einer bevorzugten Auslegung werden mit Silikon oder Polyvinylstearylcarbamat behandelte Folien oder Papiere wie zum Beispiel Glassine, HDPE oder LDPE gecoatete Papiere als Liner (Abdeckung) eingesetzt.

Das erfindungsgemäße Montageband ist für die Verwendung im Innenausbau insbesondere im Dachbereich von Gebäuden geeignet. Bevorzugt ist die Verwendung zur Verklebung von Winddichtungen, Dampfbremsen oder Dampfsperren insbesondere solchen aus Folien oder Folien enthaltenden Verbundwerkstoffen besonders bevorzugt von solchen aus Polyolefinen wie Polyethylen.

### Prüfmethoden

Die Messungen werden, wenn nicht anders angegeben, bei einem Prüfklima von 23 ± 1 °C und 50 ± 5 % rel. Luftfeuchte durchgeführt.

Die Dichte des Kautschuks wird nach ISO 1183 ermittelt und in g/cm³ ausgedrückt. Der Kristallitschmelzpunkt wird mit DSC nach ISO 3146 bei einer Aufheizrate von 10 °C/min ermittelt. Der Schmelzindex wird nach ISO 1133 bei 190 °C und 2,16 kg geprüft und in g/10 min ausgedrückt. Die Mooney-Viskosität wird nach ASTM D 1646 unter den Prüfbedingungen ML 1+4 bei 125 °C gemessen.

Die Dicke wird nach DIN 53370 bestimmt, wobei der Taster plan (nicht gewölbt) ist. Bei strukturierten Folien wird jedoch die Dicke vor dem Prägen zugrunde gelegt. Dies ist auch nachträglich über das Flächengewicht (ermittelt nach DIN 53352) und Umrechnung mit der Dichte möglich. Die Prägetiefe ist die Differenz zwischen den Dicken mit und ohne Prägung.

Die Klebkräfte auf Stahl werden bei einem Abzugswinkel von 180° in Anlehnung an AFERA 4001 an (nach Möglichkeit) 20 mm breiten Teststreifen bestimmt. Hierbei werden Stahl-Platten nach AFERA-Norm als Prüfuntergrund verwendet, auf die ein Streifen des zu prüfenden Montagebandes aufgebracht wird. Bei der Prüfung von doppelseitigen Klebebändern wird die nicht zu prüfende Seite mit einem 20 mm breiten und 30 µm dicken Streifen aus Hart-PVC abgedeckt. Die Prüfung erfolgt gemäß AFERA 4001.

Klebkräfte auf Polyethylen werden an 20 mm breiten Verklebungen einer 190 µm dicken Polyethylen-Folie und des Montagebandes ohne vorherige Lagerung ermittelt. Die Folie ist dabei senkrecht nach unten befestigt, das Klebeband wird senkrecht nach oben mit einer Geschwindigkeit von 300 mm/min abgezogen. Für Klebebänder mit weichen Trägerfolien oder doppelseitigen Klebebändern gilt das gleiche Vorgehen wie bei der Bestimmung der Klebkraft auf Stahl.

Das Masseauftrag wird entfernen der Klebemasse mit einem Lösungsmittel und nachfolgender Trocknung des Trägers bestimmt.

Die Prüfung der Scherfestigkeit erfolgt im Prinzip wie in der EP 1 582 575 B1, Absatz [0066] beschrieben (die hier durchgeführten Prüfungen erfolgen bei 23 °C auf Stahl mit einem Testgewicht von 1 kg). Die Scherfestigkeit wird dort als Scherstandszeit bezeichnet.

Zur Bestimmung der Alterungsbeständigkeit werden Verklebungen des Klebebands auf handelsüblichen Winddichtungen, Dampfbremsen oder Dampfsperren analog "Haftklebebänder, Prüf- und Kennzeichnungsvorschrift ,,für Innenanwendungen" des Fachverbands Luftdichtigkeit im Bauwesen e. V. (FLiB) Stand 13.04.2005" Bild 7-1 geprüft. Der Streifen ist 20 mm breit, 100 mm werden auf einer 190 µm LDPE-Folie mit einer Oberflächenspannung von 34 mN/m verklebt und das senkrechtherabhängende Ende ist ebenfalls 100 mm lang. Das Prüfklima beträgt 65 °C und 80 % relative Feuchte (Feucht-Wärme-Lagerungstest). Nach 11 Tagen wird gemessen um wie viele mm der Prüfstreifen sich aufgrund lediglich seines Eigengewichtes abgelöst hat.

Im Folgenden wird die Erfindung durch einige Beispiele näher erläutert ohne die Erfindung damit einschränken zu wollen.

Rohstoffe der Beispiele:
- Vistalon 7500:: EPDM, Mooney-Viskosität 91, Ethylengehalt 55,5 Gewichts-%, ENB-Gehalt 5,7 Gewichts-%, Kristallitschmelzpunkt nicht messbar, Schmelzwärme nicht messbar, Schmelzindex < 0,1 g/10 min
- Keltan DE 5005:: Ethylen-Propylen-Kautschuk basierend auf Keltan 3200 gepfropft mit 2 % Maleinsäureanhydrid, Ethylengehalt 49 %, Mooney nach Pfropfung 65, Kristallitschmelzpunkt nicht messbar, Schmelzwärme nicht messbar,
- Buna EP XT 2708 VP:: Ethylen-Propylen-Kautschuk, 68 % Ethylen, ENB 0 %, 0,8 % Maleinsäureanhydrid aufgepfropft, Mooney 28, Schmelzindex 0,10 g/10 min
- Buna EP G 2170 VP:: EPDM, Ethylengehalt 72 %, Mooney 25, ENB 1,2 %, Dichte 0,86 g/cm³, Schmelzindex 0,0 g/10 min bei 190 ° und 0,1 g/10 min bei 230 °C
- Vistamaxx 3000:: Copolymer aus Propylen und Ethylen, Schmelzindex 7 g/10min, Dichte 0,871 g/cm³, Biegemodul 40 MPa, Kristallitschmelzpunkt 56 °C, Mooney-Viskosität 4
- Ondina 933:: Weißöl (paraffinisch-naphthenisches Mineralöl)
- Wingtack 10:: flüssiges C₅-Kohlenwasserstoffharz
- Wingtack 95:: nicht hydriertes C₅-Kohlenwasserstoffharz mit einem Schmelzpunkt von 95 °C
- Escorez 1310:: nicht hydriertes C₅-Kohlenwasserstoffharz, Schmelzpunkt 94 °C, Polydispersität 1,5
- Wingtack extra:: aromatenmodifiertes C₅-Kohlenwasserstoffharz, Schmelzpunkt 97 °C, Polydispersität 1,6
- Regalite R1100:: hydriertes aromatisches Kohlenwasserstoffharz, Schmelzpunkt 100 °C, Polydispersität 1,9
- Foral 85:: voll hydrierter Glycerinester des Kolophoniums mit einem Schmelzpunkt von 85 °C und einer Polydispersität von 1,2
- Irganox 1726:: phenolisches Antioxidans mit Schwefel-basierter Funktion eines sekundären Antioxidans
- Irganox 1076:: phenolisches Antioxidans
- Tinuvin 111:: HALS-Lichtschutzmittel
- Polypox H 205:: α,ω-Diamino-polypropylenoxid (Vernetzer)

### Beispiel 1

Die Klebemasse besteht aus folgenden Komponenten:
- 100 phr: Vistalon 7500,
- 78 phr: Ondina 933,
- 212 phr: Regalite 1100,
- 2 phr: Irganox 1726.

Die Klebemasse wird in einem Extruder kontinuierlich hergestellt und mit 150 g/m² auf den Träger mittels Düsenbeschichtung aus der Schmelze aufgetragen. Der Träger ist ein Kraftpapier mit einer Grammatur von 100 g/m² und einer rückseitigen Schmelzbeschichtung mit 20 g/m² Polyethylen und einer Releasebeschichtung aus Silikon.

Klebkraft auf Stahl beträgt 23,5 N/cm und auf Polyethylen 22 N/cm. Das Klebeband lässt sich auch bei 10 °C auf Mauerwerk und Holzbalken verkleben. Ablösung im Feucht-Wärme-Lagerungstest 2 mm.

### Beispiel 2

Klebemasse wie in Beispiel 1 jedoch mit folgender Rezeptur:
- 100 phr: Vistalon 7500,
- 78 phr: Ondina 933,
- 212 phr: Escorez 1310,
- 2 phr: Irganox 1076.

Die Klebemasse wird in einem Extruder kontinuierlich hergestellt und mit 50 g/m² auf ein Trennpapier mittels Düsenbeschichtung aus der Schmelze aufgetragen. Die Trägerfolie besitzt eine Dicke von 70 µm und besteht aus 91,3 % (w/w) aus Blockcopolymer Novolen 2309 L (BASF, Schmelzindex 6 g/10 min bei 230 °C und 2,16 kg, Ethylengehalt ca.

6,5 % (w/w)), 8,4 % (w/w) Titandioxid und 0,3 % (w/w) des HALS-Stabilisators Tinuvin 770. Sie wird vor der Beschichtung einseitig Corona-behandelt. Der Klebmassenauftrag erfolgt auf die Corona-behandelte Seite des Trägermaterials durch Kaschieren von beschichtetem Trennpapier. Das Klebeband wird, ohne das Trennpapier wieder auszudecken, zu Stangen gewickelt.

Die Klebkraft auf Stahl beträgt 16,2 N/cm. Die Klebkraft auf Polyethylen beträgt 13,7 N/cm. Die Scherfestigkeit bei 23 °C liegt bei 30 Minuten. Nach Alterung beträgt die Klebkraft auf Polyethylen noch 90 % der ursprünglichen Klebkraft. Das Klebeband lässt sich auch bei 0 °C auf Mauerwerk, sägerauem Holz, Polyethylen-Folie oder Polyamid-Folie verkleben.

### Beispiel 3

Klebemasse wie in Beispiel 2 jedoch mit folgender Rezeptur:
- 100 phr: Vistalon 7500,
- 78.4 phr: Wingtack 10,
- 212 phr: Wingtack 95,
- 2 phr: Irganox 1076
- 5 phr: Tinuvin 111.

Die Klebemasse wird auch wie in Beispiel 2 beschichtet. Das Klebeband wird analog hergestellt, allerdings werden beide Seiten des Trägers Corona-behandelt und mit der Klebemasse beschichtet. Nach der zweiten Transferbeschichtung wird das zweite Trennpapier ausgedeckt und das Klebeband zu Stangen gewickelt.

Die Klebkraft auf Stahl beträgt 15 N/cm. Die Klebkraft auf Polyethylen beträgt 7 N/cm. Nach Alterung beträgt die Klebkraft auf Polyethylen noch 92 % der ursprünglichen Klebkraft. Die Scherfestigkeit bei 23 °C liegt bei 50 Minuten. Das Klebeband lässt sich auch bei 0 °C auf Mauerwerk, sägerauem Holz, Polyethylen-Folie oder Polyamid-Folie verkleben.

### Beispiel 4

Klebemasse wie in Beispiel 1 jedoch mit folgender Rezeptur:
- 100 phr: Buna EP G 2170 VP,
- 64 phr: Ondina 933,
- 193 phr: Regalite R1100
- 2 phr: Polypox H 205
- 2 phr: Irganox 1076.

Die Klebemasse wird wie in Beispiel 2, jedoch mit einem Masseauftrag von 200 g/m² beschichtet und ohne das Trennpapier auszudecken zu Stangen gewickelt. Die Anwendung erfolgt als trägerloses doppelseitig klebendes Transfertape zum Beispiel zum Befestigen von Winddichtungen, Dampfbremsen und Dampfsperren auf sägerauem Holz.

Die Klebkraft auf Polyethylen beträgt 5 N/cm. Nach Alterung beträgt die Klebkraft auf Polyethylen noch 96 % der ursprünglichen Klebkraft. Die Scherfestigkeit bei 23 °C liegt bei 850 Minuten. Ablösung im Feucht-Wärme-Lagerungstest < 1 mm. Das Klebeband lässt sich auch bei 0 °C auf Mauerwerk, sägerauem Holz, Polyethylen-Folie oder Polyamid-Folie verkleben.

### Beispiel 5

Klebemasse wie in Beispiel 1 jedoch mit folgender Rezeptur:
- 100 phr: Buna EP XT 2708 VP,
- 64 phr: Ondina 933,
- 193 phr: Regalite R1100
- 2 phr: Polypox H 205
- 2 phr: Irganox 1076.

Die Klebemasse wird wie in Beispiel 2, allerdings mit einem Masseauftrag von lediglich 70 g/m², beschichtet. Das Klebeband wird, ohne das Trennpapier wieder auszudecken, zu Stangen gewickelt.

Die Klebkraft auf Stahl beträgt 9,4 N/cm. Die Klebkraft auf Polyethylen beträgt 5,3 N/cm. Nach Alterung beträgt die Klebkraft auf Polyethylen noch 95 % der ursprünglichen Klebkraft. Die Scherfestigkeit bei 23 °C liegt bei 720 Minuten. Das Klebeband lässt sich auch bei 0 °C auf Mauerwerk, sägerauem Holz, Polyethylen-Folie oder Polyamid-Folie verkleben.

### Beispiel 6

Klebemasse wie in Beispiel 5 jedoch mit folgender Rezeptur:
- 100 phr: Keltan DE 5005,
- 34 phr: Ondina 933,
- 123 phr: Foral 85
- 2 phr: Irganox 1076.

Die Klebemasse wird in einem Extruder kontinuierlich hergestellt und mit 200 g/m² auf ein Trennpapier mittels Düsenbeschichtung aus der Schmelze aufgetragen. Das Trägermaterial besitzt eine Dicke von 100 µm und besteht aus mit Polyethylen beschichtetem Kraftpapier (20 g/m² Polyethylen). Der Klebmassenauftrag erfolgt auf die Seite des Trägermaterials aus Kraftpapier durch Kaschieren von beschichtetem Trennpapier. Das Klebeband wird, ohne das Trennpapier wieder auszudecken, zu Stangen gewickelt.

Klebkraft auf Stahl beträgt 16 N/cm. Die Klebkraft auf Polyethylen beträgt 8 N/cm. Die Scherfestigkeit bei 23 °C liegt bei 50 Minuten. Ablösung im Feucht-Wärme-Lagerungstest < 1 mm Das Klebeband lässt sich auch bei 0 °C auf Mauerwerk, sägerauem Holz, Polyethylen-Folie oder Polyamid-Folie verkleben.

### Vergleichsbeispiel 1

Herstellung wie Beispiel 1 jedoch mit Vistamaxx 3000 anstelle von Vistalon 7500. Klebkraft auf Stahl und auf Polyethylen liegt über 20 N/cm (Masse spaltet durch Kohäsionsbruch). Die Scherfestigkeit bei 23 °C liegt bei < 1 Minute. Ablösung im Feucht-Wärme-Lagerungstest: vollständig.

## Patentansprüche

1. Montageklebeband für den Innenausbau aus einem Träger und einer darauf zumindest einseitig aus der Schmelze beschichteten Klebemasse **dadurch gekennzeichnet dass**,
die Klebemasse ein Ethylen-Propylen-Kautschuk mit einer Dichte zwischen 0,86 und 0,89 g/cm³ und ein Klebharz enthält.

2. Montageklebeband nach Anspruch 1,
**dadurch gekennzeichnet, dass**
die Klebemasse kein weiteres Polyolefin mit einem Kristallitschmelzpunkt von 105 °C oder höher enthält.

3. Montageklebeband nach Anspruch 1 oder 2,
**dadurch gekennzeichnet, dass**
der Ethylen-Propylen-Kautschuk keinen Kristallitschmelzpunkt von 105 °C oder höher aufweist.

4. Montageklebeband nach zumindest einem der Ansprüche 1 bis 3,
**dadurch gekennzeichnet, dass**
der Ethylen-Propylen-Kautschuk eine Mooney-Viskosität von mindestens 20, vorzugsweise mindesten 40, besonders bevorzugt mindestens 60 aufweist.

5. Montageklebeband nach zumindest einem der vorherigen Ansprüche,
**dadurch gekennzeichnet, dass**
der Ethylen-Propylen-Kautschuk einen Schmelzindex von weniger als 0,5 g/10 min aufweist.

6. Montageklebeband nach zumindest einem der vorherigen Ansprüche,
**dadurch gekennzeichnet, dass**
der Ethylen-Propylen-Kautschuk mit einem vernetzbaren Comonomer gepfropft ist.

7. Montageklebeband nach zumindest einem der vorherigen Ansprüche,
**dadurch gekennzeichnet, dass**
der Ethylen-Propylen-Kautschuk ein EPDM ist.

8. Montageklebeband nach zumindest einem der vorherigen Ansprüche,
**dadurch gekennzeichnet, dass**
der Ethylen-Propylen-Kautschuk weniger als 75 Gew.-%, vorzugsweise weniger als 60 Gew.-% Ethylen enthält.

9. Montageklebeband nach zumindest einem der vorherigen Ansprüche,
**dadurch gekennzeichnet, dass**
die Klebemasse enthält
- ein primäres Antioxidans vorzugsweise in einer Menge von mindestens 2 phr, und/oder - ein sekundäres Antioxidans und/oder
- ein Lichtschutzmittel vorzugsweise ein HALS und/oder
- ein UV-Absorber

10. Montageklebeband nach zumindest einem der vorherigen Ansprüche,
**dadurch gekennzeichnet, dass**
die Klebemasse mit 50 bis 300 g/m², vorzugsweise mit 100 bis 150 g/m² auf dem Träger aufgebracht ist
und/oder
die Klebkraft mindestens 10 N/cm beträgt.

11. Montageklebeband nach zumindest einem der vorherigen Ansprüche,
**dadurch gekennzeichnet, dass**
die Klebemasse vernetzt ist.

12. Montageklebeband nach zumindest einem der vorherigen Ansprüche,
**dadurch gekennzeichnet, dass**
der Träger mindestens eine Lage umfasst, vorzugsweise aus einer Folie wie aus Polyolefin, Polyester, PVC oder aus Papier oder aus einem Fadengelege oder aus einem Textil oder aus einem Verbund aus diesen Stoffen ist.

13. Montageklebeband nach zumindest einem der vorherigen Ansprüche,
**dadurch gekennzeichnet, dass** zur Verbesserung der Masseverankerung eine physikalische Oberflächenbehandlung des Trägers erfolgt und/oder der Träger mit einem Primer vorbehandelt ist.

14. Verwendung eines Montageklebebandes nach mindestens einem der vorherigen Ansprüche für den Innenausbau bevorzugt im Dachbereich von Gebäuden.

15. Verwendung eines Montageklebebandes nach mindestens einem der vorherigen Ansprüche zum Verkleben für Winddichtungen, Dampfbremsen und Dampfsperren vorzugsweise von Folien oder Folien enthaltenden Verbundwerkstoffen besonders bevorzugt von solchen aus Polyolefinen wie Polyethylen.
